# EUROPEAN PATENT SPECIFICATION

(11) **EP 3 151 359 B1**
(45) Date of publication and mention of the grant of the patent: **29.08.2018**
(21) Application number: 15465544.3
(22) Date of filing: 01.10.2015
(51) Int. Cl.: H02J 5/00, B60L 11/18, H02J 7/02

(54) **CHARGING DEVICE AND METHOD FOR OPERATING A CHARGING DEVICE**
LADEVORRICHTUNG UND VERFAHREN ZUM BETRIEB EINER LADEVORRICHTUNG
DISPOSITIF DE CHARGE ET PROCÉDÉ POUR FAIRE FONCTIONNER UN DISPOSITIF DE CHARGE

(43) Date of publication of application: 05.04.2017
(73) Proprietor: Continental Automotive GmbH, 30165 Hannover (DE)
(72) Inventor: Mariu, Stefan, 707515 Tomesti / Iasi (RO)

(56) References cited:
- JP-A- 2013 118 720
- US-A- 5 821 731
- US-A1- 2012 043 931
- US-A1- 2014 139 181

## Description

The invention relates to a charging device and to a method for operating a charging device.

Inductive charging, also known as wireless charging, uses an electromagnetic field to transfer energy between two objects. This is usually done by means of a charging device or a charging station. Energy is sent through an inductive coupling to an electrical device, which can then use that energy to charge a battery or to run the device itself.

Such charging devices typically use an inducting coil, also known as an emitter coil, to create an alternating electromagnetic field from within a charging base station, and a second induction coil, also known as a receiver coil, in the portable device takes power from the electromagnetic field and converts it back into electric current to charge a battery. The two induction coils in proximity combine to form an electrical transformer. A main challenge regarding that kind of charging devices is the increase of the degree of efficiency. Therefore, the distance between the emitter coil and the receiver coil has to be reduced as much as possible.

Currently only a few options of adaptable wireless charging devices for mobile phones exist on the marked. All these charging devices usually use two motors to guide an emitter coil in position to be aligned with the device's receiver coil, one motor for each axis. By using this kind of approach to align the axes of the coils, the price of that kind of charging devices itself increase quite much. Besides, the motors and the guiding that add to the price, the mechanisms for moving the emitter coil increase the number of mechanical mobile parts, increasing the risk of breakdowns and downtimes.

US20120043931 and JP2013118720 both disclose a charging device for charging an electric device with a mechanism for aligning emitter and receiving coils comprising two motors allowing the movement of the emitter coil along the X and Y-axis.

US2014019181 discloses a charging device for charging the battery of an electric vehicle and comprising a mechanism for aligning emitter and receiving coils with two motors allowing the movement of the emitter coil around two coplanar rotation axis.

It is an object of the present invention to provide a charging device and a method for operating a charging device, by means of which the wireless charging of a device can be achieved in a simplified and reliable manner.

This object is solved by a charging device having the features of patent claim 1 and by a method for operating such a charging device having the features of patent claim 10. Advantageous embodiments with expedient developments of the invention are indicated in the other patent claims.

The charging device according to the invention comprises an emitter coil for inducing a current in a receiver coil. Furthermore, the charging device comprises a detecting unit for detecting a relative positioning of the emitter coil to the receiver coil. Moreover, the charging device comprises a spiral guiding and a disc arranged between the emitter coil and the spiral guiding, whereby the disc is pivotable about a rotation axis and comprises a radial guiding slot. The charging device comprises furthermore a connecting element which is moveably guided by means of the spiral guiding as well as by means of the radial guiding slot and is at least indirectly connected to the emitter coil. The charging device comprises a motor for rotating the disc and a control unit designed to control the motor depending on the detected relative positioning of the emitter coil to the receiver coil for aligning them to each other with a predetermined accuracy.

The charging device according to the invention has three main functions: detecting the position of the receiver coil, aligning the emitter coil and the receiver coil and providing an energy transfer from the emitter coil to the receiver coil. The detection of the position of the receiver coil and the detection of the relative positioning of the emitter coil to the receiver coil can be determined by different methods already well-known in the state in the art. Also the energy transfer between the emitter coil and the receiver coil takes place according to already well-known methods according to the state of the art.

The main focus of the charging device is on the aligning of the emitter coil and the receiver coil. The aligning is achieved by means of the motor that engages the disc, either directly or by other means of transmitting the rotary motion. The disc acts as a support and has a slit in form of the radial guiding slot, at least indirectly, for the emitter coil. The connecting element is engaged by the spiral guiding as well as by the radial guiding slot, whereby the connecting element passes through the radial guiding slot of the disc, such that the connecting element is at least indirectly connected to the emitter coil.

After the position of the receiver coil is detected by means of the detecting unit, this information regarding the position of the receiver coil is used when the motor rotates the disc. As a result of the rotational movement of the disc, the disc presses with the edges of the radial guiding slot against the connecting element engaging it together with the emitter coil into a rotational motion. Because the connecting element is also engaged with the spiral guiding during the rotary motion of the disc, the connecting element, consequently also the emitter coil, moves closer to or further away from the rotation axis of the disc. Thereby, the movement of the emitter coil is determined by the pitch of the spiral guiding and the rotation direction of the disc. As soon as the emitter coil and the receiver coil are aligned with the predetermined accuracy, an energy transfer from the emitter coil to the receiver coil starts. The finer the spiral guiding's pitch is chosen, the more precisely can the receiver coil and the emitter coil be aligned.

As a result of the invention, a significant cost reduction of the charging device can be achieved. Especially, the number of moving parts can be reduced significantly, and only one motor is required for a precise aligning of the emitter coil and the receiver coil. The charging device according to the invention can be substantially used for the wireless charging of any electric or electronic devices, for example, for consumer electronics as well as for traction batteries of electric or hybrid vehicles. Depending on the specific application of the charging device, only the components of the charging device have to be adapted accordingly. The operating principle itself stays always the same, such that a very simply and reliable charging device can be provided.

In an advantageous embodiment of the invention, the emitter coil is arranged on a coil holder which is arranged on an upper side of the disc facing away from the spiral guiding, whereby the connecting element is pivotably connected to the coil holder. In other words, the coil holder and the connecting element are fixed together while they can rotate independently to one another. As soon as the disc is turned, the connecting element moves along the spiral guiding. Since the connecting element is pivotably connected to the coil holder, the coil holder itself does not necessarily rotate. Wires and other elements, which are connected with the emitter coil, do not get tangled up. Preferably, a rotation limiter is attached to the coil holder limiting a rotation of the coil holder. Thereby, a rotation of the coil holder, and also a rotation of the emitter coil, can be reduced to a predefined degree very reliably.

According to another advantageous embodiment of the invention, the spiral guiding forms a curve in a plane which winds around the centre point at a continuously increasing distance from the centre point. In other words, the spiral guiding forms a spiral line in a plane. The pitch of the spiral guiding has preferably a constant value, which simplifies the controlling of the motor and, thus, the alignment of the emitter coil to the receiver coil. Preferably, the plane is at least substantially parallel to the disc. This improves the accuracy of the alignment between the emitter coil and the receiver coil additionally.

In a further advantageous embodiment of the invention, the centre point of the spiral guiding and the rotation axis of the disc are aligned coaxially. In other words, the spiral guiding and the disc are aligned coaxially to each other. This simplifies additionally the exact alignment of the emitter coil and the receiver coil. According to another advantageous embodiment of the invention, the spiral guiding is an integral part of a housing component of the charging device. For example, the spiral guiding can be part of a lower housing part of the charging device. The housing component and the spiral guiding can be produced in one manufacturing step as a result. For example, the housing component with the integrated spiral guiding can be produced via injection moulding. As a result, the spiral guiding and the housing component can be produced very economically.

According to an alternative advantageous embodiment of the invention, the spiral guiding is attached to a housing component of the charging device. For example, the spiral guiding can be detachably mounted to the housing component. Insofar, this can be advantageous, since the spiral guiding can be exchanged or replaced quite easily, for example due to wear and tear or because another pitch of the spiral guiding is needed.

In a further advantageous embodiment of the invention, the detecting unit is capable of providing the relative positioning of the emitter coil to the receiver coil in polar coordinates to the control unit. Therefore, the positions of the emitter coil and the receiver coil can be provided in polar coordinates. Hence, each point on a plane is determined by a distance from a reference point and an angle from a reference direction. The relative positioning of the emitter coil to the receiver coil can be specified very exactly, which supports the exact alignment of the emitter coil to the receiver coil.

The method for operating a charging device according to the invention or according to any of the advantageous embodiments of the invention comprises the steps of detecting a relative positioning of the emitter coil to the receiver coil, and controlling of the motor by the control unit depending on the detected relative positioning of the emitter coil to the receiver coil such that they are aligned to each other with a predetermined accuracy. Advantageous embodiments of the charging device are also advantageous embodiments of the method for operating the charging device, whereby the charging device comprises means for carrying out the steps of the method.

Further advantages, features, and details of the invention derive from the following description of a preferred embodiment as well as from the drawings. The features and feature combinations previously mentioned in the description as well as features and feature combinations mentioned in the following description of the figures and/or shown in the figures alone can be employed not only in the respective indicated combination but also in any other combination or taken alone without leaving the scope of the invention.

The drawing shows in:
- Fig. 1: an exploded view of a charging device, comprising an emitter coil for inducing a current in a receiver coil, a pivotable disc with a radial guiding slot and a spiral guiding below the disc;
- Fig. 2: a sectional view of the charging device; and in
- Fig. 3: a top view of the charging device, whereby an upper housing part of the charging device is not shown.

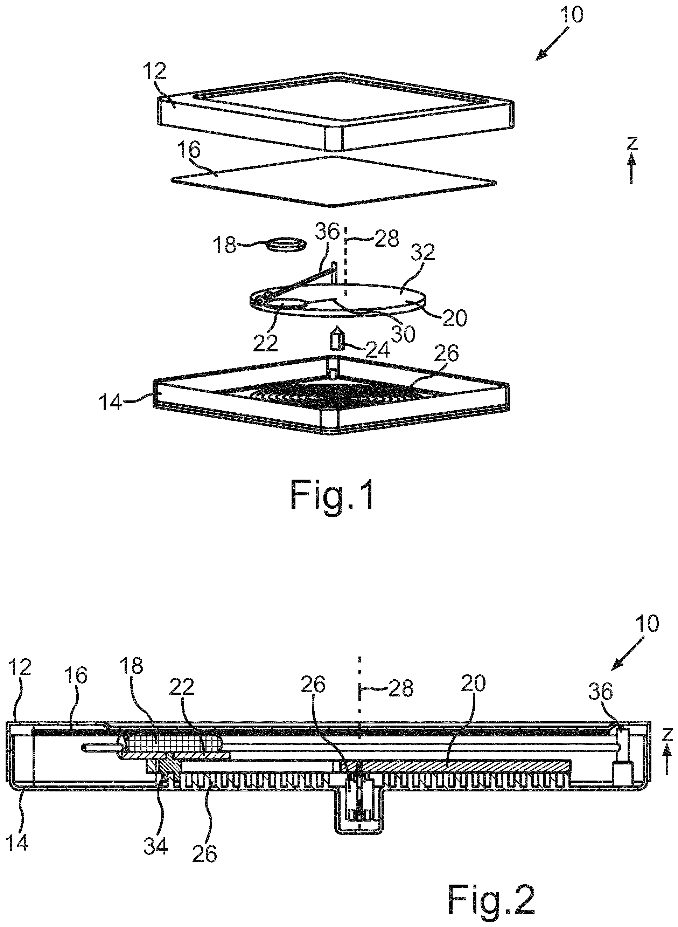

A charging device 10 is shown in an exploded view in Fig. 1. The charging device 10 comprises an upper housing part 12 and a lower housing part 14. A printed circuit board 16, an emitter coil 18, a disc 20, a coil holder 22, a motor 24 and a spiral guiding 26 are arranged within the two housing parts 12, 14. The charging device 10 is a self-aligning wireless charger for charging one or more batteries of an electric or electronic device, for example the batteries of any consumer electronics or also for charging a traction battery of a hybrid or electric vehicle.

The emitter coil 18 serves to induce a current in a receiver coil which is not shown here. The printed circuit board 16 comprises a detecting unit which is not shown here for detecting a relative positioning of the emitter coil 18 to the receiver coil. With respect to a vertical axis z of the charging device 10, the disc 20 is arranged between the emitter coil 18 and the spiral guiding 26. The disc 20 is pivotable about a rotation axis 28 which extends parallel to the vertical axis z of the charging device 10. Furthermore, the disc 20 comprises a radial guiding slot 30.

The emitter coil 18 is arranged on the coil holder 22 which is arranged on an upper side 32 of the disc 20 facing away from the spiral guiding 26.

The charging device 10 is shown in a sectional view in Fig. 2. A connecting element 34 is moveably guided by means of the spiral guiding 26 as well as by means of the radial guiding slot 30 of the disc 20. The connecting element 34 is pivotably connected to the coil holder 22, on which the emitter coil 18 is arranged. Furthermore, a rotation limiter 36 is attached to the lower housing part 14 and to the coil holder 22 limiting a rotation of the coil holder 22, and thus, also limiting a rotation of the emitter coil 18.

As shown in Fig. 2, the spiral guiding can be an integral part of the lower housing part 14 of the charging device 10. Alternatively, the spiral guiding 26 may also be a separate part attached to the lower housing part 14 of the charging device 10.

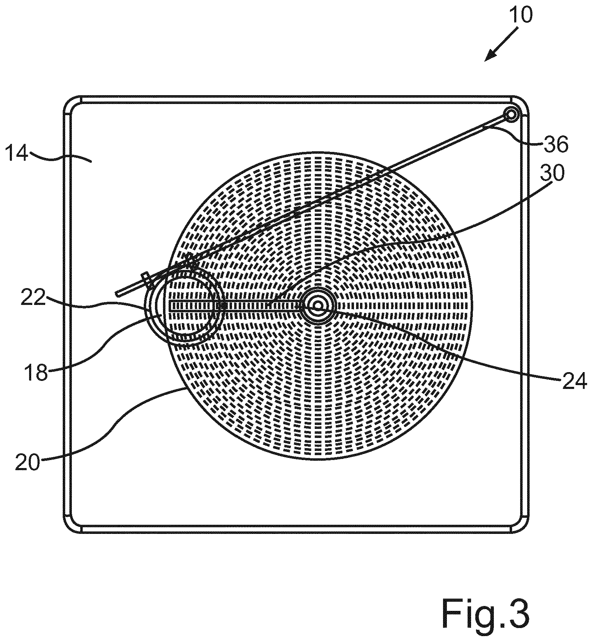

The charging device 10 is shown in a top view in Fig. 3, whereby the upper housing part 12 is not shown. The here not shown spiral guiding 26 forms a curve in a plane which winds around a centre point at a continuously increasing distance from this centre point. The plane is at least substantially parallel to the disc 20, whereby the centre point of the spiral guiding 26 and the rotation axis 28 of the disc 20 are aligned coaxially.

As soon as an electric or electronic device is arranged nearby the charging device 10 for charging a battery of the electric or electronic device, the position of the relating receiver coil of this device is detected by means of the printed circuit board 16 of the charging device 10. Thereby, a relative positioning of the emitter coil 18 to the receiver coil can be detected and estimated by the before mentioned detecting unit, which can be an integral part of the printed circuit board 16.

The position of the receiver coil can, for example, be translated by a software in polar coordinates, hence into a radial coordinate and an angle. After that, based on the current emitter coil 18 position, the printed circuit board 16, which also serves as a control unit for the motor 24, controls the motor 24 such that the disc 20 is rotated. As a result, the disc 20 presses with the edges of the radial guiding slot 30 against the connecting element 34 engaging it, together with the coil holder 22 and the emitting coil 18 into a rotary motion.

Because the connecting element 34 is also engaged with the spiral guiding 26 during the rotary motion of the disc 20, the connecting element 34 will move closer from or further to the rotation axis 28 together with the coil holder 22 and the emitter coil 18 corresponding to the pitch of the spiral guiding 26 and the amount of rotation of the disc 20. As soon as the emitter coil 18 is aligned with the receiver coil with a predetermined accuracy the motor 24 is stopped, and hence, the rotary motion of the disc 20 is stopped, too. Thereafter, an energy transfer from the emitter coil 18 to the corresponding receiver coil is started. The finer the pitch of the spiral guiding 26 is chosen, the more exactly the emitter coil 18 and the receiver coil can be aligned to each other.

Thus, the charging device 10 only needs one motor 24 for aligning the emitter coil 18 very precisely to a corresponding receiver coil for charging the battery of an electric or electronic device. As a result, the charging device 10 needs only a few mechanical components for the alignment of the emitter coil 18 and has only a low number of moving parts. This contributes to a cost reduction of the charging device 10 and to the durability of the charging device 10.

### List of reference signs

- 10: charging device
- 12: upper housing part
- 14: lower housing part
- 16: printed circuit board
- 18: emitter coil
- 20: disc
- 22: coil holder
- 24: motor
- 26: spiral guiding
- 28: rotation axis
- 30: radial guiding slot
- 32: upper side
- 34: connecting element
- 36: rotation limiter
- z: vertical axis

## Claims

1. Charging device (10), comprising
- an emitter coil (18) for inducing a current in a receiver coil;
- a detecting unit for detecting a relative positioning of the emitter coil (18) to the receiver coil;
- a disc (20) pivotable about a rotation axis (28);
- a motor (24) for rotating the disc (20);
- a control unit (16) designed to control the motor (24) depending on the detected relative positioning of the emitter coil (18) to the receiver coil for aligning them to each other with a predetermined accuracy,
**characterized in that**
the charging device (10) comprises a spiral guiding (26);
the disc (20) is arranged between the emitter coil (18) and the spiral guiding (26) and comprises a radial guiding slot (30);
the charging device (10) comprises a connecting element (34) which is movably guided by means of the spiral guiding (26) as well as by means of the radial guiding slot (30) of the disc (20) and is at least indirectly connected to the emitter coil (18).

2. Charging device (10) according to claim 1,
**characterized in that**
the emitter coil (18) is arranged on a coil holder (22) which is arranged on an upper side (32) of the disc (20) facing away from the spiral guiding (26), whereby the connecting element (34) is pivotably connected to the coil holder (22).

3. Charging device (10) according to claim 2,
**characterized in that**
a rotation limiter is attached to the coil holder (22) limiting a rotation of the coil holder (22).

4. Charging device (10) according to any of the preceding claims, **characterized in that**
the spiral guiding (26) forms a curve in a plane which winds around a centre point at a continuously increasing distance from the centre point.

5. Charging device (10) according to claim 4,
**characterized in that**
plane is at least substantially parallel do the disc (20).

6. Charging device (10) according to claim 4 or 5,
**characterized in that**
the centre point of the spiral guiding (26) and the rotation axis (28) of the disc (20) are aligned coaxially.

7. Charging device (10) according to any of the preceding claims,
**characterized in that**
the spiral guiding (26) is an integral part of a housing component (14) of the charging device (10).

8. Charging device (10) according to any of the claims 1 to 6,
**characterized in that**
the spiral guiding (26) is attached to a housing component (14) of the charging device (10).

9. Charging device (10) according to any of the preceding claims,
**characterized in that**
the detecting unit is capable of providing the relative positioning of the emitter coil (18) to the receiver coil in polar coordinates to the control unit (16).

10. Method for operating a charging device (10) according to any of the preceding claims, in which a relative positioning of the emitter coil (18) to the receiver coil is detected and the motor (24) is controlled by the control unit (16) depending on the detected relative positioning of the emitter coil (18) to the receiver coil such that they are aligned to each other with a predetermined accuracy.

## Patentansprüche

1. Ladevorrichtung (10), umfassend:
- eine Emitterspule (18) zum Induzieren eines Stroms in einer Empfängerspule;
- eine Detektierungseinheit zum Detektieren einer relativen Positionierung der Emitterspule (18) zu der Empfängerspule;
- eine Scheibe (20), die um eine Rotationsachse (28) drehbar ist;
- einen Motor (24) zum Rotieren der Scheibe (20);
- eine Steuereinheit (16), die zum Steuern des Motors (24) in Abhängigkeit von der detektierten relativen Positionierung der Emitterspule (18) zu der Empfängerspule konzipiert ist, um sie mit einer vorbestimmten Genauigkeit zueinander auszurichten,
**dadurch gekennzeichnet, dass**
die Ladevorrichtung (10) eine Spiralführung (26) umfasst; die Scheibe (20) zwischen der Emitterspule (18) und der Spiralführung (26) angeordnet ist und einen radialen Führungsschlitz (30) umfasst;
die Ladevorrichtung (10) ein Verbindungselement (34) umfasst, das mittels der Spiralführung (26) sowie mittels des radialen Führungsschlitzes (30) der Scheibe (20) beweglich geführt wird und mindestens indirekt mit der Emitterspule (18) verbunden ist.

2. Ladevorrichtung (10) nach Anspruch 1,
**dadurch gekennzeichnet, dass**
die Emitterspule (18) auf einem Spulenhalter (22) angeordnet ist, der auf einer oberen Seite (32) der Scheibe (20) angeordnet ist, die von der Spiralführung (26) weg weist, wodurch das Verbindungselement (34) drehbar mit dem Spulenhalter (22) verbunden ist.

3. Ladevorrichtung (10) nach Anspruch 2,
**dadurch gekennzeichnet, dass**
ein Rotationsbegrenzer an dem Spulenhalter (22) befestigt ist, der eine Rotation des Spulenhalters (22) begrenzt.

4. Ladevorrichtung (10) nach einem der vorhergehenden Ansprüche,
**dadurch gekennzeichnet, dass**
die Spiralführung (26) eine Kurve in einer Ebene bildet, die sich in einem kontinuierlich zunehmenden Abstand zu dem Mittelpunkt um einen Mittelpunkt windet.

5. Ladevorrichtung (10) nach Anspruch 4,
**dadurch gekennzeichnet, dass**
die Ebene mindestens im Wesentlichen parallel zu der Scheibe (20) ist.

6. Ladevorrichtung (10) nach Anspruch 4 oder 5,
**dadurch gekennzeichnet, dass**
der Mittelpunkt der Spiralführung (26) und die Rotationsachse (28) der Scheibe (20) koaxial ausgerichtet sind.

7. Ladevorrichtung (10) nach einem der vorhergehenden Ansprüche,
**dadurch gekennzeichnet, dass**
die Spiralführung (26) ein integraler Teil einer Gehäusekomponente (14) der Ladevorrichtung (10) ist.

8. Ladevorrichtung (10) nach einem der Ansprüche 1 bis 6,
**dadurch gekennzeichnet, dass**
die Spiralführung (26) an einer Gehäusekomponente (14) der Ladevorrichtung (10) befestigt ist.

9. Ladevorrichtung (10) nach einem der vorhergehenden Ansprüche,
**dadurch gekennzeichnet, dass**
die Detektierungseinheit in der Lage ist, der Steuereinheit (16) die relative Positionierung der Emitterspule (18) zu der Empfängerspule in Polarkoordinaten bereitzustellen.

10. Verfahren zum Betrieb einer Ladevorrichtung (10) nach einem der vorhergehenden Ansprüche, wobei eine relative Positionierung der Emitterspule (18) zu der Empfängerspule detektiert wird und der Motor (24) durch die Steuereinheit (16) in Abhängigkeit von der detektierten relativen Positionierung der Emitterspule (18) zu der Empfängerspule gesteuert wird, so dass sie mit einer vorbestimmten Genauigkeit zueinander ausgerichtet sind.

## Revendications

1. Dispositif de charge (10), comprenant
- une bobine émettrice (18) pour induire un courant dans une bobine réceptrice ;
- une unité de détection pour détecter un positionnement relatif de la bobine émettrice (18) par rapport à la bobine réceptrice ;
- un disque (20) pouvant pivoter autour d'un axe de rotation (28) ;
- un moteur (24) pour faire tourner le disque (20) ;
- une unité de commande (16) conçue pour commander le moteur (24) en fonction du positionnement relatif détecté de la bobine émettrice (18) par rapport à la bobine réceptrice pour les aligner l'une avec l'autre avec une précision prédéterminée,
**caractérisé en ce que**
le dispositif de charge (10) comprend un guide en spirale (26) ;
le disque (20) est disposé entre la bobine émettrice (18) et le guide en spirale (26), et comprend une fente de guidage radiale (30) ;
le dispositif de charge (10) comprend un élément de liaison (34) qui est guidé de manière mobile au moyen du guidage en spirale (26) ainsi qu'au moyen de la fente de guidage radiale (30) du disque (20), et est relié au moins indirectement à la bobine émettrice (18).

2. Dispositif de charge (10) selon la revendication 1,
**caractérisé en ce que**
la bobine émettrice (18) est disposée sur un support de bobine (22) qui est disposé sur un côté supérieur (32) du disque (20) opposé au guidage en spirale (26), l'élément de liaison (34) étant relié de façon pivotante au support de bobine (22).

3. Dispositif de charge (10) selon la revendication 2,
**caractérisé en ce que**
un limiteur de rotation est fixé au support de bobine (22) limitant une rotation du support de bobine (22).

4. Dispositif de charge (10) selon l'une quelconque des revendications précédentes,
**caractérisé en ce que**
le guidage en spirale (26) forme une courbe dans un plan qui s'enroule autour d'un point central à une distance croissante en continu à partir du point central.

5. Dispositif de charge (10) selon la revendication 4,
**caractérisé en ce que**
un plan est au moins sensiblement parallèle au disque (20).

6. Dispositif de charge (10) selon la revendication 4 ou 5,
**caractérisé en ce que**
le point central du guidage en spirale (26) et l'axe de rotation (28) du disque (20) sont alignés coaxialement.

7. Dispositif de charge (10) selon l'une quelconque des revendications précédentes,
**caractérisé en ce que**
le guidage en spirale (26) fait partie intégrante d'un composant de boîtier (14) du dispositif de charge (10).

8. Dispositif de charge (10) selon l'une quelconque des revendications 1 à 6,
**caractérisé en ce que**
le guidage en spirale (26) est fixé à un composant de boîtier (14) du dispositif de charge (10).

9. Dispositif de charge (10) selon l'une quelconque des revendications précédentes,
**caractérisé en ce que**
l'unité de détection est capable de fournir le positionnement relatif de la bobine émettrice (18) par rapport à la bobine réceptrice, en coordonnées polaires, à l'unité de commande (16).

10. Procédé de fonctionnement d'un dispositif de charge (10) selon l'une quelconque des revendications précédentes, un positionnement relatif de la bobine émettrice (18) par rapport à la bobine réceptrice étant détecté, et le moteur (24) étant commandé par l'unité de commande (16) en fonction du positionnement relatif détecté de la bobine émettrice (18) par rapport à la bobine réceptrice, de telle sorte qu'elles sont alignées l'une avec l'autre avec une précision prédéterminée.
